# EUROPÄISCHE PATENTANMELDUNG

(11) **EP 0 895 172 A2**
(43) Veröffentlichungstag der Anmeldung: **03.02.1999**
(21) Anmeldenummer: 98250253.6
(22) Anmeldetag: 10.07.1998
(51) Int. Cl.: G06F 17/60

(54) **"Verfahren zur Abrechnung von Versanddienstleistungen"**

(30) Priorität: 29.07.1997 DE 19733605
(71) Anmelder: Francotyp-Postalia Aktiengesellschaft & Co., 16547 Birkenwerder (DE)
(72) Erfinder: Früchtel, Ingrid, 13465 Berlin (DE)

(57) **Zusammenfassung**

Verfahren zur Abrechnung von Versanddienstleistungen auf der Basis der jeweiligen Transportleistungstarife der Carrier.

Aufgabengemäß sollen Abrechnungsabäufe der Dienstleistungen verschiedener Carrier durch eine zentrale Abrechnung vereinheitlicht und vereinfacht und die Abrechnung der Dienstleistungen wahlweise einzeln oder summiert erfolgen. Erfindungsgemäß wird ein in eine Einrichtung 3, die eine Druckeinrichtung und eine Telekommunikationseinrichtung umfaßt, geladenes Anwenderprogramm 33 aktiviert, aus dem mindestens eine Tarifleistungstabelle eines Carriers 6 auswählbar ist. In diese Einrichtung 3 wird das Gewicht oder wahlweise auch eine andere physikalische Größe 5 eines Versandgutes 5 eingegeben und im Zusammenhang mit den ausgewählten Versandparametern ein Leistungswert berechnet. Die Einrichtung 3 druckt mittels ihrer Druckeinrichtung 35 einen Kennschein aus , der die Versandparameter umfaßt, mindestens aber die wertkennzeichnende Versandgebühr wiedergibt und der auf das Versandgut 5 aufgebracht wird.

Die das Versandgut 5 kennzeichnenden Informationen werden in der Einrichtung 3 zwischengespeichert und die ausgeführte Wertkennzeichnung des Versandgutes 5 über eine Telekommunikationsverbindung zur Datenzentrale wahlweise einzeln ode summiert übertragen. Die in der Datenzentrale empfangenen Daten werden erfaßt, zusammengetragen und mittels Abrechnungsprogramm getrennt für jeden Carrier 6 abgerechnet und in Form einer Rechnung dem Versender zur Begleichung übermittelt. Das Verfahren gestattet es eine Einrichtung 3 für die Abrechnung von Versanddienstleistungen einzusetzen bei der auf alle Sicherungsmaßnahmen zur Vermeidung von Manipulationen an Geldvorräten verzichtet werden kann.

## Beschreibung

Die Erfindung betrifft ein Verfahren zur Abrechnung von Versanddienstleistungen verschiedener Carrier für vorzugsweise Paketpost auf der Basis der jeweiligen Transportleistungstarife der Carrier.

Der Paketversand erfolgt in modernen Büros am Personalcomputer im weiteren mit PC bezeichnet. Entsprechende Lösungen bietet der Anmelder mit dem Paketversandsystem Euklas an. Dieses System erledigt die Versandabfertigung von beispielsweise Briefen, Drucksachen, Warensendungen, Päckchen, Postgut und Paketen. Ein Carrier beispielsweise Post, USPS, UPS, FedEx, DHL, DPD und/oder andere Spediteure nehmen das Versandgut entgegen und leiten das selbe an eine Zieladresse. Für die Transportleistungen errechnet das System auf der Grundlage gültiger Transportleistungstarife der Carrier die Versandgebühr, erstellt einen Frachtaufkleber der das Entgelt und andere notwendige Versandinformationen enthält und druckt in üblicherweise Weise Versandpapiere aus.
Die Abrechnung der Versanddienstleistung mit dem Versender erfolgt durch den Carrier. Der Carrier stellt dazu, dem Versender den Kostenaufwand für die erbrachten Dienstleistungen in Rechnung. Die Bezahlung durch den Versender erfolgt ohne Vorkasse.
Das System umfaßt einen PC mit einer Datenbank, in der eine Anzahl von Transportleistungstarifen für verschiedene Carrier gespeichert ist. Der PC ist mit mindestens einer Waage verbunden, um Gewichtsdaten von der Waage zu empfangen und entsprechend den ausgewählten Versandoptionen im Rahmen der Systembenutzung den Entgeltwert auf der Basis der Transportleistungstarife zu errechnen.
Eine andere Variante sieht vor, daß das Versandgutgewicht separat ermittelt wird und zusammen mit anderen Versanddaten wie beispielsweise die Postleitzahl, Formatangaben und ergänzende Frachtdaten über ein Eingabemittel eingegeben wird und daraus der Entgeltwert errechnet wird. Ergänzende Frachtdaten beziehungsweise Versandoptionen, wie beispielsweise Empfängeradresse, Versandart, Versendungsform und Carrier bestimmt der Versender durch entsprechende Eingaben über die PC-Tastatur bzw. durch Auswahl aus einem Menüangebot. Mit Druckeinrichtungen, die dem PC verbunden sind werden Versandpapiere und Frachtaufkleber für das Versandgut erzeugt.
Anhand der erstellten Frachtpapiere überprüft der Abholdienst des jeweiligen Carriers individuell den Versandumfang und bestätigt durch Schätzung oder durch Nachmessen die Korrektheit der berechneten Entgeltwerte für das entgegengenommenen Versandgut. Die vom Paketversandsystem gesammelten Bearbeitungsdaten gewährleisten die Überprüfung des Leistungsumfanges und ermöglichen bei Versandfehlern eine Paket- und Vorgangssuche. Darüber hinaus können für Monats- und Jahresstatistiken, getrennt für jeden Carrier Versanddaten zusammengestellt werden. Eine spezielle Ausführung einer Vorrichtung zur Versandabfertigung ist in der DE 3808616 erläutert.

Ein Paketversandsystem der beschriebenen Art ist bezüglich der Anschaffung und der Unterhaltung zu den höherwertigen Industriegütern zu zählen und demzufolge für Kunden mit geringem Postaufkommen unrentabel.
Andererseits werden Versandprozesse immer aufwandsintensiver, da die Anzahl privater Carrier im Bereich der Versanddienstleistung ständig steigt und auch das Leistungsspektrum einen breiteren Ausbau erfährt. Weiterhin besteht ein Problem beim Versandkunden darin, daß die Carrier die Abrechnungen und Abrechnungsabläufe in den ausgegebenen Rechnungen und Frachtbriefen jeweils eigenspezifisch darstellen.

Andererseits ist es üblich, zur Abrechnung von Entgelten für Briefpost eine Frankiermaschine einzusetzen. Die Frankiermaschine kann mit einer Steuereinheit, einem Speichermittel, einem Eingabemittel, einem Modem oder anderen Daten-Empfangsmittel, einem Ein/Ausgabemittel und einem Drucker ausgerüstet sein. Durch die Kopplung unter anderem mit einer Waage und einem Streifengeber sind technische Mittel vorhanden, um neben der Briefpost auch Paketpost versandfertig zu machen. Die auf einem Frankierstreifen anbringbaren Versandangaben können ermittelt, berechnet und ausgedruckt werden. Der erzeugbare Stempelabdruck entspricht den Erfordernissen der Deutschen Post AG für Briefpost. Frankiermaschinen sind durch die nationalen Postbehörden zulassungspflichtig. Eine entsprechende Zulassung erhalten nur solche Maschinen, die eine gegen Manipulation gesicherte Verwaltung, Nachladung und Abrechnung von Geldwerten gewährleisten und eine gesicherte Druckeinrichtung aufweisen.
Die Übertragung von Guthaben in die Frankiermaschine erfolgt teilweise bereits über eine Telekommunikationseinrichtung von einer entfernten Datenzentrale. Die Maßnahmen zur Absicherung von Geldanforderungen und Buchungsvorgängen bezüglich der Verhinderung von Manipulationen bzw. unautorisierten Benutzungen erfordern einen hohen technischen Aufwand zur Überprüfung der Benutzungsberechtigung und der Identifizierung der Frankiermaschine. Allen bekannten Frankiermaschinen ist gemeinsam, daß sie einen Entgeltabdruck nur ausführen, wenn genügend Guthaben in der Frankiermaschine geladen ist. Dieses Zahlungsregime, als Vorkasse bezeichnet, ist für die Versandabfertigung von Versandgut ungeeignet, da die Entgelte für diese Versandgattung um Größenordnungen höher liegen, als die Versandabfertigung für Briefe und ähnliche Postsendungen. Dem Versender ist deshalb eine Vorfinanzierung nicht zuzumuten. Diese Unzumutbarkeit erfährt eine drastische Steigerung dadurch, daß künftig weitere private Frachtunternehmen in den Bereich Paketversand eindringen werden, für die getrennte Geldvorräte anzulegen wären.

Es sind Lösungen bekannt, wie beispielsweise in der DE 2201051 beschrieben, einen postalischen Apparat zur Berechnung postalischer Gebühren für den Paketversand zu verwenden. Der zur Selbstbedienungs-Postaufgabe vorgesehene Apparat umfaßt zwei Druckeinrichtungen zum Drucken der Gebühren und der Adressdaten sowie der Paketkennzeichnung für besondere Dienste. Ein Abdruck wird nur erzeugt, wenn Geldbeträge in ausreichender Höhe bezahlt wurden. Die Automatenabfertigung ist für den Kunden sehr zeitaufwendig, da dieser seine zu versendende Paketpost selbst zum Postschalter schaffen muß. Ebenso ist diese Automatenabfertigung hinsichtlich der Bargeldabfertigung nicht lukrativ. Für den Carrier ergibt sich ein erhöhter Aufwand, bedingt durch die Sofortkassenverwaltung. Die Kommunikation einer Frankiermaschine mit einer entfernten Datenverarbeitungsanlage zur zentralen Verrechnung von Portogebühren ist beispielsweise in der DE 3126785 und DE 3126786 beschrieben. Die Absicherung dieser Verbindung zwischen Frankiermaschine und Datenzentrale ist eine notwendige Zulassungsvoraussetzung des Systems durch die zuständige Postbehörde, um die Manipulierbarkeit der zu verrechnenden Geldbeträge auszuschließen. Die maschinentechnischen Maßnahmen hierfür sind sehr kostenintensiv.

In der DE 3644231 wird eine gesicherte Verrechnungseinheit ähnlich einer Frankiermaschine vorgeschlagen, in die von einer entfernten Datenzentrale Geldmittel bereitgestellt werden, die in Verbindung mit einem Fernrückstellungszentrum zur Verrechnung der Mittel steht. In diesem Fernrückstellungszentrum werden Portonachladevorgänge gesammelt und gespeichert. Die Übermittlung von Portoguthaben erfolgt bei gleichzeitiger Abbuchung des geladenen Guthabenwertes vom Konto des Kunden, wie beispielsweise in der DE 3644230 beschrieben. Für dieses auf einer Vorkasse beruhende Abrechnungsprinzip ist die Beibehaltung der Flexibilität des Paketversandes nicht durchsetzbar. Insbesondere ist abwegig, das jeder Carrier eine eigene Datenzentrale einrichtet, die mit den Kundeneinrichtungen eine Kommunikationsverbindung aufbaut und Guthaben überträgt. Nachteilig für den Kunden ist weiterhin, daß bei mehreren Carriern mehrere Konten einzurichten wären, die Kontendeckungen zu gewährleisten und die verschiedenen Abrechnungsabläufe zu kontrollieren wären. Erforderliche Sicherungsmaßnahmen zur Gewährleistung der Manipulationssicherheit, verteuern entsprechende Einrichtungen in der Anschaffung.

In der FR 2730575 wird ein Frankier-, Buchungs- und Faktuierungsverfahren für postalische Artikel und Leistungen beschrieben, das ein zugelassenes Datenverarbeitungssystem verwendet. Die Daten werden im Datenverarbeitungssystem aufbereitet und durch eine Frankiermaschine weitergegeben. Das Datenverarbeitungssystem übermittelt ein Anwenderprogramm, das ein Kundenkonto umfaßt. Der Kunde kann nach Beendigung eines Vorgangs festlegen, ob der Vorgang sofort bezahlt wird oder ob bei Ablauf eines vorher festgelegten Zeitraums eine Rechnungslegung erfolgen soll.
Das Verfahren erlaubt die Überprüfung der Übereinstimmung der Registerinhalte der Frankiermaschine und der Registerinhalte des Datenverarbeitungssystem. Nachteilig ist, daß der Kunde ausreichend Guthaben in der Frankiermaschine und zusätzlich auch ein Kundenkonto im Datenverarbeitungssystem zu halten hat.

Ein Verfahren zum Freimachen von Postsendungen mit wertmäßig vorwählbaren Gebühren ist in der DE 3624116 beschrieben. Die von einem Drucker gedruckten Gebühren werden automatisch an eine zumindest zeitweise über eine Fernmeldeverbindung mit dem Drucker verbundene Erfassungseinrichtung übermittelt und dort registriert. Auch diese Lösung geht von einer Druckfreigabe aus, wenn genügend Guthaben vorhanden ist. Die Sicherungsmaßnahmen machen frankiermaschinenähnliche Einrichtungen für die Anwendung als Druckeinrichtung geltwertfreier Zeichen zu teuer.

Vom Anmelder wird in der DE 4034292 ein Verfahren vorgeschlagen, mit dem ein beim Nutzer vorhandenes Endgerät, beispielsweise ein Faxgerät, zur Ausführung von Gebührenabdrucken genutzt werden kann und die Abrechnung der Portogebühren in einer Datenzentrale erfolgt.
Dem Endgerät ist zur Gebührenverrechnung für einzelne Frankierungen eine gesicherte Portobox zugeordnet, welche über die Kommunikationsverbindung von der Datenzentrale Guthaben und eine Freigabe zum Druck erhält. Auch hier besteht der Nachteil darin, daß der Kunde nur durch Vorkasse Guthaben erwerben kann. Nachdem vorgeschlagenen Prinzip fallen außerdem hohe Kosten für die jeweiligen Verbindungsaufnahmen mit der Datenzentrale an. Außerdem ist die Einbindung mehrerer Carrier technisch schwer realisierbar, da insbesondere die Schaffung der Voraussetzungen für die Verfügbarkeit aktueller Tarifleistungstabellen einer Anzahl von Carriern mit hohem technischen Aufwand bei entsprechenden Endgeräten verbunden ist.

Dieser Aufwand ist bereits in modernen Frankiermaschinen realisiert. Durch ihren bestimmungsgemäßen Einsatz ist die Berechnung der Portogebühr für eine Postsendung aus Tarifleistungstabellen und anderer über die Tastatur eingebbarer Daten möglich. Ebenso sind Voraussetzungen gegeben Tarifleistungstabellen von einer Datenzentrale oder durch Datenträger für verschiedene Dienste in die Speicher der Frankiermaschine zu laden bzw. gespeicherte Inhalte zu aktualisieren. Wie vom Anmelder in der EP 747846 vorgeschlagen, ist aus einer Carriervielzahl der günstigste Anbieter ermittelbar. Damit wird insbesondere Unterstützt, daß Versandabläufe nach bisher gebräuchlicher Art und Weise durch effizientere Methoden abgelöst werden können.

In der DE 3903718 wird ein Postgebührenabrechnungssystem beschrieben, für das ein Perrsonalcomputer vorgesehen wird, um umfangreiche Abrechnungsberichte über einen angeschlossenen Drucker zu erstellen. Zur Kreditüberwachung einer abteilungsbezogenen Frankiermaschinenbenutzung werden Daten zu einer Chipkarte übertragen, die insbesondere die Registerinhalte des Sicherheitskontos betreffen. Die abrufbaren Informationen können in verschiedenen Formaten angezeigt und ausgedruckt werden. Diese Lösung ist auch auf andere Zulieferdienste, die einen Frankierabdruck erfordern, anwendbar, beinhaltet aber alle Nachteile die für eine Vorkasse bereits angegeben wurden. Auch wenn Chipkarten für einzelne Carrier zugeordnet wären, müßte ein Versender entsprechend viele Guthaben zur Ausführung der Frankierungen erwerben. Insbesondere für Versender mit geringem Versandgutaufkommen ist diese Abrechnung mit Vorfinanzierungen unökonomisch.

Zweck der Erfindung ist eine Vereinheitlichung und Vereinfachung der Abrechnungsabläufe der Dienstleistungen verschiedener Carrier, so daß auch Versender mit geringem Postaufkommen von derartigen Diensten Gebrauch machen können.

Der Erfindung liegt die Aufgabe zugrunde, ein Verfahren für ein Versandgutabrechnungssystem zu entwickeln, bei dem Versandgüter jeweils nur mit einem Kennschein versehen werden, bei dem eine zentrale Abrechnung wahlweise einzeln oder summiert und eine Kontrolle der Vorgänge durch den Kunden ermöglicht wird.

Erfindungsgemäß wird diese Aufgabe dadurch gelöst, daß, für Transportdienste von Versandgut eine Einrichtung verwendet wird, die mittels einer Druckeinrichtung einen Stempelabdruck oder einen stempelähnlichen Abdruck erzeugt, im weiteren mit Kennschein bezeichnet, der mindestens die berechneten Versandkosten nach Tarifleistungstabellen öffentlicher und/oder privater Carrier abbildet. Diese Einrichtung ist mit einer Telekommunikationseinrichtung ausgestattet, um eine Verbindungsaufnahme mit einer entfernten Datenzentrale zu ermöglichen.
Zur Durchführung des erfindungsgemäßen Verfahrens ist eine Einrichtung geeignet, die über einen Drucker beziehungsweise Anschluß für einen externen Drucker verfügt, mit ausreichend Speicherkapazität ausgerüstet ist und mit einer entfernten Einrichtung kommuniziert, vorzugsweise als Modem-Einrichtung ausgeführt ist.

Die Einrichtung zur Gebührenberechnung für Versanddienstleistungen und zur Druckausgabe der mit der Dienstleistung im Zusammenhang stehenden Informationen verwendet. Dazu ist die Einrichtung mit einem Eingabemittel, mit Berechnungssoftware, mit Mittel zur Ansteuerung der digitalen Drucktechnik, mit Speichermittel in denen beispielsweise Tarifleistungstabellen gehalten werden, mit einem internen Modem oder Modemanschluß und mit technischen Mitteln, zum Anschluß peripherer Einrichtungen, beispielsweise einer Wiegeeinrichtung ausgestattet.
Die Abrechnung von Geldwerten erfolgt in der Einrichtung nicht.
Ein in der Einrichtung geladenes Anwenderprogramm wird aktiviert, aus dem mindestens die Tarifleistungstabelle eines Carriers auswählbar ist.
Das zu versendende Versandgut wird erfindungsgemäß gewogen oder bezogen auf mindestens eine physikalische Größe des Versandgutes bewertet.
Die ermittelten Versandgutparameter werden in die Einrichtung mit anderen Versandgutdaten, mindestens aber Zielort und Carrier eingegeben. Auf der Grundlage der gültigen Tarifleistungstabelle eines ausgewählten Carriers wird für die eingegebenen Daten ein Leistungswert berechnet. Mindestens der berechnete Leistungswert, der die wertkennzeichnende Versandgebühr entspricht, wird mittels der Druckeinrichtung auf einen Kennschein gedruckt, der als Versandschein auf das Versandgut aufgebracht wird.
Die Speichermittel umfassen einen Zwischenspeicher, in den alle Druckoperationen, die den Kennschein betreffen, zwischengespeichert werden.
Mittels der Kommunikationseinrichtung wird die Einrichtung zur Übertragung ausgeführter Wertkennzeichnungen mit einer enffernten Datenzentrale verbunden. Die übertragenen Daten werden in der Datenzentrale erfaßt, zusammengetragen und mittels Abrechnungsprogramm getrennt für jeden Carrier abgerechnet. Von der Datenzentrale wird mindestens dem Versender das Abrechnungsergebnis übermittelt.
Das Verfahren ermöglicht die Verwendung einer Einrichtung, bei der Sicherheitsmaßnahmen zum Schutz von Geldmitteln gegen Manipulation entfallen können , da in der Maschine keine Geldmittel gespeichert, verwaltet oder gebucht werden müssen. Das Verfahren ist insbesondere deshalb kostengünstig einsetzbar, weil in der Einrichtung und in der Datenzentrale, bei den durchgeführten Abrechnungsabläufen nicht auf irgendein Guthabenkonto zugegriffen wird.

Die Abrechnung der Versanddienstleistungen erfolgt nur durch die Datenzentrale auf der Grundlage übermittelter Benutzungs- und Informationsdaten von der beim Versender stationierten Einrichtung.
Neben den Vorteilen aus den zentral durchgeführten Abrechnungsabläufen werden eine weitestgehende Vereinheitlichung und Vereinfachung der daraus resultierenden Abrechnungen. Weiter vorteilhafte Merkmale sind den Unteransprüchen zu entnehmen.

Die Erfindung wird nachfolgend am Ausführungsbeispiel näher erläutert. Es zeigen:
- Fig 1.: ein Versandsystem unter Verwendung einer modifizierten Frankiermaschine die mit einer Waage gekoppelt ist,
- Fig 2.: ein Versandsystem unter Verwendung einer modifizierten Frankiermaschine ohne Waage
- Fig 3.: ein Muster eines Kennscheines,
- Fig 4.: Muster eines erweiterten Kennscheines

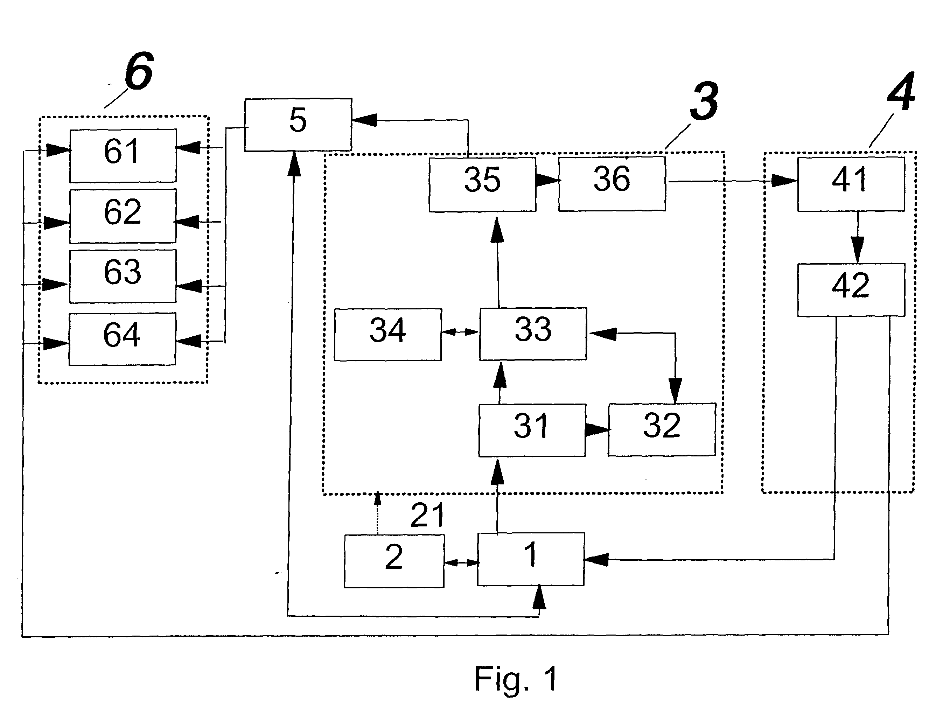

Gemäß Fig. 1 sind am Standort des Versenders 1 eine Waage 2 und eine modifizierte Frankiermaschine 3, im weiteren Frankiermaschine genannt, installiert. Die Frankiermaschine 3 ist über eine Telekommunikationseinrichtung 36, vorzugsweise ein Modem mit einer entfernten Datenzentrale 4 verbunden. In vorteilhafter Weise wird eine modifizierte Frankiermaschine 3 zur Gebührenberechnung für Versanddienstleistungen verwendet. Die Mittel zur Durchführung der Berechnung und zur Druckausgabe der mit der Dienstleistung im Zusammenhang stehenden Informationen sind in einer herkömmlichen Frankiermaschine bereits vorhanden, beziehungsweise können zusätzlich einfach implementierte werden. Gegenüber den üblichen Anwendungen zum Frankieren von Briefpost, unterscheidet sich die modifizierte Frankiermaschine 3 dadurch, daß keine Abrechnung von Geldwerten in der Maschine erfolgt. Die Anwendung der Erfindung ist aber nicht auf diese Ausführung beschränkt.

Mittels der Waage 2 ermittelt der Versender 1 für jedes Versandgut 5 das Gewicht. Die Frankiermaschine 3 berechnet den Leistungswert für eine vom Versender 1 bestimmte Versanddienstleistung entsprechend geladener Transportleistungstarife auf der Grundlage der eingegebenen Gewichtsdaten und anderer Versandinformationen. Alle Daten und Informationen, mindestens aber den berechneten Leistungswert, druckt die Frankiermaschine 3 auf einen Kennschein, der auf dem Versandgut angebracht wird.

Die Frankiermaschine 3 ist mit einem Modem 36 zur Verbindungsaufnahme zu einer entfernten Datenzentrale 4 ausgestattet. Über diese Verbindung wird der Datenzentrale 4 jede Druckoperation der Frankiermaschine 3, bei der ein Kennschein erzeugt wird, übermittelt.
Diese Daten werden in der Datenzentrale erfaßt, zusammengetragen und mittels Abrechnungsprogramm getrennt für jeden der Carrier 61 bis 64 abgerechnet. Nach der Abrechnungsprozedur wird dem Versender getrennt für jeden tätig gewordenen Carrier 61 bis 64 eine Abrechnung in Form einer Rechnung übermittelt. Die darin aufgeführten Kosten für die Versanddienstleistung hat der Versender 1 zu begleichen.

Die Frankiermaschine 3 ist zusätzlich mit einem speziellen Anwenderprogramm 33 für Versanddienstleistungen ausgestattet. Bei Aktivierung des Anwendungsprogramms 33, ist mindestens die Tarifleistungstabelle eines Carrier 6 auswählbar. Dem Anwenderprogramm 33 sind Speichermittel 34 zugeordnet.
Die Speichermittel 34 sind in mehrere Speicherbereiche (in der Figur 1 nicht dargestellt) aufgeteilt. Hier sind unter anderem Transportleistungstariftabellen verschiedener Carrier 61 bis 64, Formulare von Kennscheinen entsprechend den jeweiligen Erfordernissen der Carrier 61 bis 64, Werbeklischees, Empfänger- und Absenderadressdaten gespeichert. Weiterhin sind Speicherkapazitäten in der Frankiermaschine 3 vorgesehen, die ausgeführte Druckoperationen vor der Übertragung zur Datenzentrale 4 zwischenspeichern und/oder für statistische Zwecke aufzeichnen. Beispielsweise ist die Berechnung von Leistungswerten durch den Zugriff auf gespeicherte Transportleistungstarife verschiedener Carrier 61 bis 64 und deren Leistungsspektren möglich. Bezogen auf die Formulare, enthalten die Speichermittel 34 mindestens den Rahmen eines Kennscheins.
Mit Hilfe des Anwenderprogramm 33 ist entsprechend der Nutzereingaben ein Kennschein ausdruckbar, der aus variablen und festen Daten zusammengesetzt ist. Inhalte und Rahmen des Kennscheins sind an die Anforderungen der Carrier 61 bis 64 angepaßt.
Weiterhin umfaßt die Frankiermaschine 3 eine Eingabeeinrichtung 31 zur Eingabe von Versandgutparametern, wie beispielsweise das Gewicht und die Abmessungen des Versandgutes 5, von zusätzlichen Informationen und/oder von zur Aktivierung wählbarer Optionen eines Anwendungsprogramms 33 durch den Versender 1. Die Anzeigeeinrichtung 32 liefert zur Benutzung der Frankiermaschine 3 notwendige Eingabeerfordernisse, zeigt alternative Auswahlmöglichkeiten auf und stellt die berechneten Leistungswerte dar.
Die in der Frankiermaschine 3 integrierte Druckeinrichtung 35 gibt einen Kennschein, ähnlich einem Stempelabdruck aus, der die Wertgröße und weitere Parameter der Versanddienstleistung entsprechend dem gewählten Anwenderprogramms 33 umfaßt. Der Kennschein wird vorzugsweise auf ein selbstklebendes Etikett gedruckt, das nach dem Ausdruck auf das Versandgut 5 geklebt wird.

Die für den Versand von Versandgut 5 modifizierte Version einer Frankiermaschine 3 unterscheidet sich von den bisher gebräuchlichen, bei den Postbehörden zugelassenen Frankiermaschinen, dadurch, daß in der Frankiermaschine 3 keine geldwerten Daten verwaltet, geladen und gebucht werden. Die Druckeinrichtung 35 druckt, bezogen auf die Versandkosten für ein Versandgut 5, nur die Wertgröße der Versandleistung in lesbarer Form, vorzugsweise als numerische Ziffer oder in Kombination mit einer maschinenlesbaren Zeichenkette.
Da in der Maschine keine Geldmittel gehalten werden, ist die bestimmungsgemäße Nutzung einer herkömmlichen Frankiermaschine bei gleichzeitigem Verzicht auf Sicherungsmaßnahmen bzw. anderen Sicherheitsstandards zur Verhinderung von betrügerischen Handlungen gegeben. Eine für Frankiermaschinen übliche Meter-Base Trennung ist für eine modifizierte Frankiermaschine 3 demzufolge nicht erforderlich.
Ebenso besteht keine Notwendigkeit die Datenübertragungsstrecke zur Datenzentrale, die Empfangs- und Verarbeitungseinrichtungen in der Datenzentrale sowie den Abdruck des Kennscheins durch besondere Kennzeichen zu sichern.
Weiterhin besteht die Besonderheit der Frankiermaschine 3 darin, daß Kosten bzw. Gebührenwerte nur berechnet werden ohne das eine Abrechnung der Dienstleistung durch die modifizierte Frankiermaschine 3 erfolgt. Die Versanddienstleistungen werden ausschließlich im Rahmen einer Nachkasse durch den Versender beglichen.
Aufwendige Softwareimplementierungen für Sperrungen und Entsperrungen der Druckeinrichtungen 35 in Abhängigkeit vom Geldvorratszustand sind nicht erforderlich.

Die Verbindungsaufnahme der Frankiermaschine 3 mit der Datenzentrale 4 über das Modem 36 erfolgt unter voreingestellten Bedingungen, entsprechend den in der Frankiermaschine 3 in bekannter Weise programmierten Abläufen zur automatischen Datenübertragung zur Datenzentrale 4.
Es sind mehrere Übertragungsregieme möglich.
So kann die Übermittlung von Versendungsdaten automatisch für jedes Versandgut 5 zur Datenzentrale 4 erfolgen oder nach einer Bestätigung durch den Versender 1. Die empfangenen Versendungsdaten werden von der Empfangseinrichtung 41 zur Abrechnungseinrichtung 42 übertragen. Die Abrechnung für erbrachte Leistungen erfolgt erstmals durch die Datenzentrale in der Art, daß die übermittelten Versanddaten, im wesentlichen die Angaben die den Versender 1 identifizieren, den Carrier 6 bestimmen und den Leistungswert betreffen registriert, getrennt nach Carriern zugeordnet und dem Versender 1 in Rechnung gestellt werden.
Vorteilhaft sind aber vor allem andere mit den Carriern 61 bis 64 zu vereinbarende Abrechnungsrahmen, die ebenfalls automatisch ablaufen, aber eine Optimierung der Verbindungszeiten mit der Datenzentrale 4 gestatten. So ist eine Übertragung der in der Frankiermaschine 3 zwischengespeicherten Versandvorgänge zur Datenzentrale 4 mit festgesetzter Zeitgrenze, beispielsweise wöchentlich, 14-tägig oder monatlich möglich.

Alternativ kann eine Grenzstückzahl von Kennscheinen vorgegeben sein, bei der automatisch eine Datenübertragung zur Datenzentrale 4 ausgelöst wird.
Ebenso ist eine automatische Datenübertragung in Abhängigkeit der Überschreitung einer summierten Berechnungsgröße im Zwischenspeicher der Frankiermaschine 3, für eine bestimmte Anzahl, mindestens aber für zwei Versandstücke möglich. Werden die Datenübertragungszyklen durch eine Einstellgröße limitiert, so ist es vorteilhaft, die automatische Übertragung der Daten dem Versender dadurch anzuzeigen, das die Druckeinrichtung 35 solange gesperrt bleibt, bis der Versender 1 eine Freigabetaste der Eingabeeinrichtung 31 betätigt. Das kann beispielsweise die Taste sein, die eine manuelle Aktivierung der Datenübertragung zur Datenzentrale 4 auslöst und/oder abschließt.
Vorteilhafterweise sollten automatische Datenübertragungsabläufe zu Zeiten erfolgen, in denen die Frankiermaschine 3 nicht zur Berechnung von Leistungstarifen und zum Herstellen von Kennscheinen verwendet wird. Insbesondere bieten sich zur Datenübertragung die Nachtstunden an, da hier auch Gebühren für die Verbindungsaufnahme mit dem Datenzentrale 4 kostengünstiger sind.

Das bestehende Datenzentrum eines Frankiermaschinenherstellers kann so erweitert werden, daß Versandvorgänge entkoppelt und von Teleporto-Nachladeprozessen, wie diese für Briefpostfrankierungen üblich sind, abgerechnet werden.
Dabei darf die Einbindung der Abrechnung von Versandgutkosten gemäß der vorgeschlagenen Lösung, für das Teleportodatenzentrum im Bereich der Anwendung monitärer Daten, nicht zu Einschränkungen der Sicherheit führen.
Vorzugsweise wird das Modem in bekannter Weise zur Übertragung von Daten auch in Gegenrichtung, von der Datenzentrale 4 zur Frankiermaschine 3 verwendet. Die Übermittlung von Abrechnungsergebnissen einerseits und das Laden von gültigen Transporttariftabellen andererseits sowie deren Aktualisierung sind möglich.
Entsprechende Bestätigungen des Datenempfanges durch die Datenzentrale, können mit Datum und Uhrzeit in der Frankiermaschine in einem nicht weiter gekennzeichnetem speziellen Speicher, speziell für statistische Zwecke und zur Kontrolle durch den Versender 1 und für den Carrier 6 aufgezeichnet werden. Die Speicherinhalte sind dann jederzeit abrufbar und auf der Anzeigeeinrichtung 32 darstellbar.
Die in der Frankiermaschine 3 geladenen Anwenderprogramme 33 dienen zur Steuerung aller Operationen, die der Versandabfertigung von Versandgut 5 dienen.
Die Verwendung der Frankiermaschine 3 schließt eine Benutzerführung mit ein. So werden mittels der Anzeigeeinrichtung 32, Bedienungsoperationen, optionale Wahlmöglichkeiten und weitere Informationen offeriert. Der Nutzerdialog beginnt mit der Aktivierung des Anwenderprogramms 33, aus dem mindestens die Tarifleistungstabelle eines Carriers 6 (in der Figur 1 Carrier 61 bis 64), auswählbar ist. Häufig wiederholbare Operationen können durch zugeordnete Funktionstasten der Eingabeeinrichtung 31 beziehungsweise durch Tastenfolgen ausgelöst werden.
Mit einer der Frankiermaschine 3 beigestellten Waage 2 wird durch den Versender 1 für das Versandgut 5 eine Gewichtsbestimmung vorgenommen. Der ermittelte Gewichtswert wird in die Frankiermaschine 3 eingegeben. Die Eingabe erfolgt entweder mittels der Eingabeeinrichtung 31 der Frankiermaschine 3 durch den Versender 1 oder automatisch über eine Signalleitung 21, die die Waage 2 mit der Frankiermaschine 3 verbindet.
Mittels der Eingabeeinrichtung 31 können zusätzliche Informationen eingegeben werden,
wie beispielsweise die Abmessungen des Versandgutes 5, wenn die Frachtbestimmungen der Carrier 61 bis 64 das erfordern.
Außerdem erfolgt über die Eingabeeinrichtung 31 die Eingabe weiterer Versandparameter, wie beispielsweise die Versandart, die Versendungsform und das Ziel.
Diese Wahl parameter und weitere sind vorzugsweise aus einer Menüstruktur optional auswählbar und durch Eingabetasten bzw. Tastenfolgen aktivierbar.
Eine vorteilhafte Ausgestaltung gestattet dem Versender 1, sich die Tarifleistungstabellen verschiedener Carrier 61 bis 64 anzusehen und den günstigsten Leistungsanbieter auf der Grundlage der gewünschten Versandbedingungen auszuwählen. Im EP 747864 ist ausführlich dargestellt, wie durch den Zugriff auf gültige Tarifleistungstabellen für mindestens zwei Carrier der günstigste Dienstleister ermittelt werden kann.

Die Berechnung des Leistungswertes für die Transportleistung erfolgt in der Frankiermaschine 3. Nach Eingabe der zur Berechnung erforderlichen Versandangaben, mindestens aber einer aktivierten Tarifleistungstabelle, dem Zielort und dem ausgewählten Carrier 6, ist die Frankiermaschine 3 hierzu aktiviert.
Tarifierungen sind kundenspezifisch gestaltbar.
Eine Druckauslösung des angezeigten Berechnungswertes durch den Versender 1 ist vorteilhafterweise vorzusehen, ist aber insbesondere bei einer Anzahl von gleichartigem Versandgut 5 optional umgehbar. Ebenso kann die authorisierte Benutzung der Frankiermaschine 3, oder nur die Druckeinrichtung 35 durch einen Paßwortschutz gesichert sein.

Der von der Druckeinrichtung 35 ausgedruckte Kennschein umfaßt wie bereits ausgeführt die erforderlichen Versandparameter für eine von einem Carrier angebotene Versanddienstleistung, mindestens aber den berechneten wertkennzeichnenden Leistungswert des Versandgutes 5. Als Druckträger dienen vorzugsweise selbstklebende Papierstreifen oder Scheine, die der Druckeinrichtung 35 von einer Ausgabeeinrichtung für abgestapelte Druckträger (in der Fig 1 nicht dargestellt) zugeführt werden. Alternativ können selbstklebende Etiketten von einer Bandrolle nach der Druckausführung abgezogen werden und auf das Versandgut 5 geklebt werden.
Das mit Kennschein versehene Versandgut 5 wird zur Versendung dem Transportdienst der Carrier 6 übergeben.

Die auf den Kennscheinen gedruckten Daten, die zur Abrechnung der Dienstleistung erforderlich sind, werden für jede ausgeführte Druckoperation der Frankiermaschine 3 mittels Modem 36 zur entfernten Datenzentrale 4 übertragen. Die Datenzentrale 4 umfaßt eine Datenempfangseinrichtung 41, die die übermittelten Informationen, wie beispielsweise die Maschinenidentifikationsnummer, die durchgeführten Druckoperationen, Carrierangaben und Versendungskennzeichen registriert, zusammenträgt und separat für jeden Carrier 61 bis 64 versenderbezogen abrechnet. Die Abrechnung erfolgt in der Abrechnungseinrichtung 42 der Datenzentrale 4 auf der Grundlage der von der Empfangseinrichtung empfangenen Daten zu den einzelnen Versandvorgängen.
Zu den abgerechneten Versandvorgängen wird in der Datenzentrale eine der Leistungsinanspruchnahme entsprechende Rechnung erstellt, die dem Versender 1 zur Begleichung übermittelt wird. Die Rechnung enthält detaillierte Angaben zur erbrachten Dienstleistung durch den Carrier 61 bis 64, und summiert das entsprechende Entgelt, das zu bezahlen ist.
Die Übermittlung der Rechnung erfolgt in bekannter Weise entweder elektronisch mittels eines beim Versender vorhandenen Endgerätes, beispielsweise ein Faxgerät oder auf postalischem Weg. Die Übermittlung der Rechnung als Briefpost, hat den Vorteil, daß auch Zahlungsauftragsscheine, vorzugsweise bereits für die Hausbank ausgestellt, zum Versender 1 geschickt werden können. Gleichzeitig mit der Rechnungslegung beim Versender 1, erhält auch der Carrier 6, der die Dienstleistung erbracht hat, ein Duplikat der Rechnung. Das erleichtert einerseits die Vorgangskontrolle und andererseits ergeben sich weitere Möglichkeiten im Zahlungsverkehr. Liegen beispielsweise den Carriern 6 Einzugsermächtigungen des Versenders 1 vor, ist dieser berechtigt, kostendeckend Geldbeträge durch Bankeinzug einzuholen. Ebenso kann die Hausbank des Versenders 1 der Empfänger der Originalrechnung sein. Hierzu sind zusätzliche Identifizierungsmerkmale des Versenders 1 auf der Rechnung anzubringen, um eine Überprüfung der bankerheblichen Daten zu ermöglichen. Ist die Zulässigkeit der Rechnungslegung festgestellt, erfolgt die Uberweisung des Rechnungsbetrages auf das vom Versender 1 angegebene Carrierkonto. Die üblichen Banksicherungsszenarien sind dabei zu beachten.

Da die Datenzentren der Frankiermaschinenhersteller genutzt werden können, ergeben sich für die Paketförderung ins Ausland ebenfalls günstige Versandbedingungen. Eine Vereinheitlichung der Abrechnungsvorgänge ist durch Zentralisierung der Leistungsabrechnung durch maschinelle Erstellung der Rechnungen weitestgehend abgesichert.
Für den Versender 1 sowie für den Carrier 6 vereinfachen sich die Rechnungsprüfung und für den Carrier insbesondere die Rechnungslegung. Ein weiterer Vorteil ergibt sich für den Carrier daraus, daß er auf die Erstellung von Frachtbriefen oder entsprechende Begleitpapiere verzichten kann.

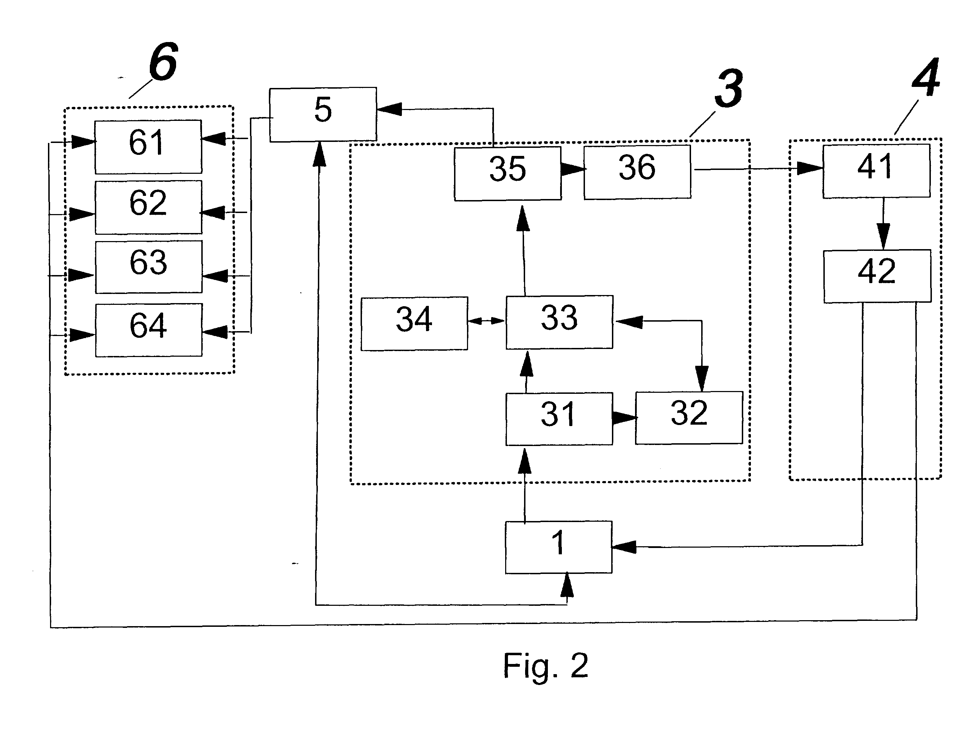

Gemäß Figur 2 entfällt eine Waage, wenn für ein Versandgut 5 nicht durch Wiegen zu ermitteln ist, sondern der Carrier 6 die Versanddienstleistung auch ausführt, wenn andere Meß- und/oder Schätzgrößen in die Berechnung der Leistungswerte einfließen. Abhängig ist das von Tarifangeboten der Carrier 61 bis 64 die eine Wertbestimmung für eine Versanddienstleistung für ein Versandgut akzeptieren, die nicht auf eine Gewichtermittlung beruht.
Am Standort des Versenders 1 können dann anstelle der Gewichtsbestimmung durch Wiegen, andere physikalische Versandgutparameter bestimmt werden, die einzeln oder miteinander kombiniert die Berechnung der Wertgröße der Versanddienstleistung nach dem erfindungsgemäßen Verfahren gestatten.
Beispielsweise können das geschätzte Gewicht, die ermittelte Volumengröße oder die Stückzahl für Versandgüter 1 ein hinreichendes Kriterium zur Eingabe in die Frankiermaschine 3 und zur Leistungsberechnung darstellen. Diese Ausführung ist auf die vorgenannten Versandgutgrößen nicht beschränkt. Vom Erfindungsgedanken sind alle überprüfbaren Angaben, die ein Versandgut kennzeichnen miterfaßt sowie auch die Kombinationen dieser physikalischen Größen.

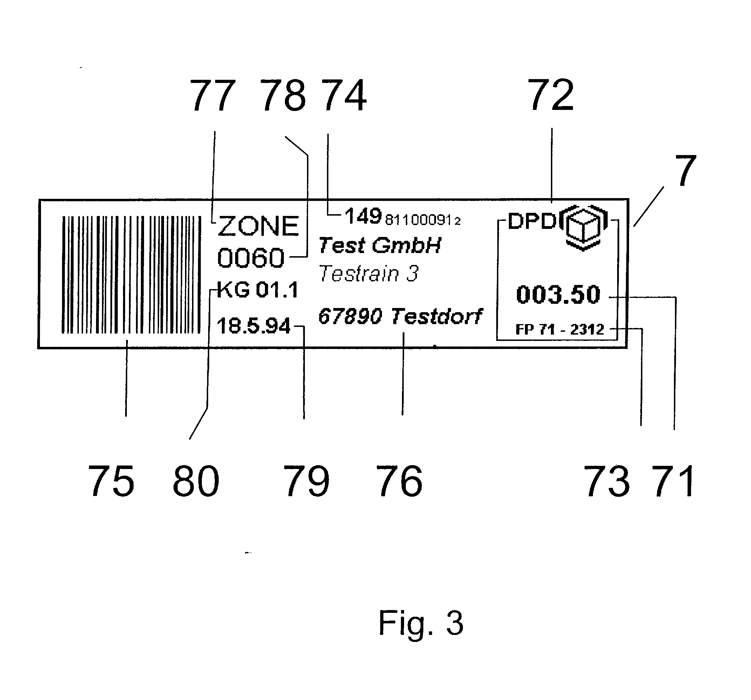

Eine weitere Ausgestaltung sieht einen von der modifizierten Frankiermaschine 3 ausgegebene modifizierten Stempelabdruck vor, der sich deutlich von einem postalischen Wertabdruck unterscheidet und eindeutig als Kennschein eines Carriers 6 verifiziert werden kann. In Fig. 3 ist ein erzeugter Kennschein 7, ähnlich einem Frankierstreifen dargestellt. Das abgedruckte Entgelt 71 entspricht dem von der modifizierten Frankiermaschine berechneten Leistungswert für das zu versendende Gut, auf der Grundlage der Leistungstabelle des jeweiligen Carriers. In einem vorgegebenen Rahmen werden Angaben zum Carrier 72 und die Kundennummer 73, die in der Fig. 3 mit der Frankiermaschinennummer übereinstimmt., mitgedruckt. Jedes Versandgut erhält eine zugeordnete Versandgutnummer 74, die bei Versandfehlern, eine Vorgangssuche gestattet. Alternativ oder zusätzlich kann die Versandgutnummer Barcode 75 mit einbezogen werden.
Die Darstellung der Absenderangaben 76, insbesondere die Zonenangabe 77 repräsentiert durch die Zonennummer 78 sind nur eine Auswahl möglicher Abdruckinformationen. So sind in der Fig. 3 außerdem das Versandabfertigungsdatum 79 und die Gewichtsangabe 80 mit aufgenommen.
Ein besonderer Vorteil ergibt sich daraus, daß die modifizierte Frankiermaschine, Werbebotschaften auf den Kennschein drucken kann.

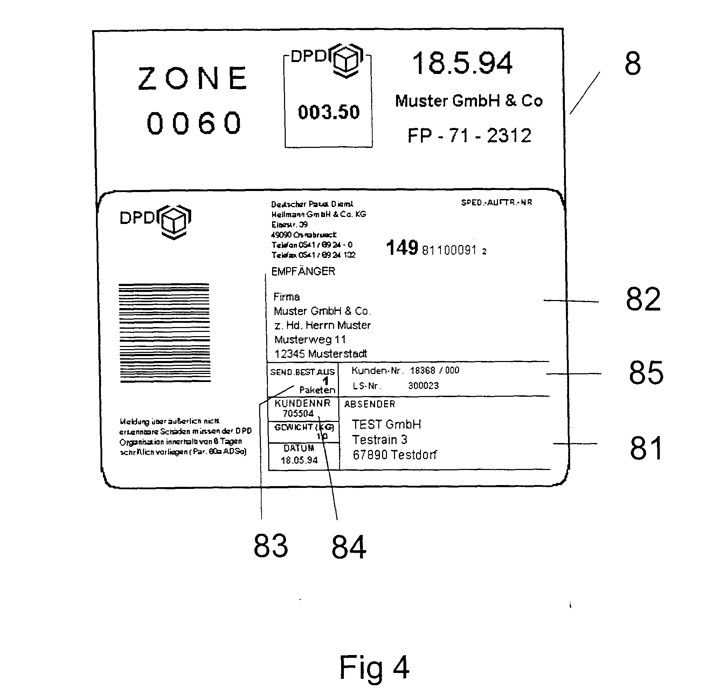

Die Fig. 4 zeigt einen Kennschein ohne Routung. Zusätzlich enthält der Stempelabdruck nicht nur die Angaben des Absenders 81 sondern auch bereits im Stempel integriert die Versandadresse 82. Eine Angabe bezieht sich auf die Kennzeichnung der Sendung 83. In vorliegendem Fall besteht die Sendung aus 1 Paketstück. Für Absender und Empfänger werden Kundennummer 84, 85 auf dem Kennschein ausgegeben. Ein aufgedruckter Barcode verifiziert die Versandadresse. In einem nicht dargestellten Kundenspeicher hält der Versender 1 Adressdaten seiner Kunden. Diese Adressdaten menügeführt abrufbar und auf der Anzeigeeinrichtung 32 darstellbar. Zur Erzeugung des Kennscheins ist mindestens ein Rahmen zur Aufnahme variabler und fester Daten in der modifizierten Frankiermaschine gespeichert. Die Verwendung eines einzigen Formulars für einen Kennschein ist nicht zwingend. Die Speichermittel der modifizierten Frankiermaschine sind so ausgelegt, daß weitere Formularscheine für verschiedene Gattungen von Versandgut abrufbar und ausdruckbar zur Verfügung stehen.
Der äußere Rahmen, der beispielsweise der Kontur eines Kennscheins entspricht, ist in einzelne Informationsblöcke aufgeteilt. Inhalte die in diese Blöcke automatisch geschrieben werden, ergeben sich durch Eingabe über die Tastatur, beispielsweise Gewicht und Format, vorhandene Systemdaten wie das Datum sowie Paketscheinnummer und der berechnete Leistungswert sowie aus gespeicherten Dateien, die Empfängeradresse, PLZ, Zonennummer, Kundennummern usw. Entscheidend ist auch, daß die Versandart und die Carrierbezeichnung auf dem Paketschein sichtbar gemacht wird. Weiterhin sind Routungsangaben, in der Fig 4 nicht dargestellt, auf Kennscheinen anbringbar, wie beispielsweise als Barcodeaufbringung.

Die Anwendung des erfindungsgemäßen Verfahrens ist nicht auf eine Benutzung am Standort des Versenders beschränkt. Der Fahrdienst bzw. Abholdienst kann eine modifizierte Frankiermaschine, die das erfindungsgemäße Verfahren verwendet, mobil einsetzen. Insbesondere für einen Versandkunden mit geringem Postaufkommen wäre das vorteilhaft.

### Verwendete Bezugszeichen

- 1: Versender
- 2: Waage
- 21: Signalleitung
- 3: Frankiermaschine
- 31: Eingabeeinrichtung
- 32: Anzeigeeinrichtung
- 33: Anwenderprogramme
- 34: Speichermittel
- 35: Druckeinrichtung
- 36: Modem
- 4: Datenzentrale
- 41: Empfangseinrichtung
- 42: Abrechnungseinrichtung
- 5: Versandgut
- 6: Carrier
- 61: erster Carrier
- 62: zweiter Carrier
- 63: dritter Carrier
- 64: vierter Carrier

- 7: Versandgutleistungschein
- 71: Leistungswert
- 72: Carrier
- 73: Kundennummer
- 74: Versandgutnummer
- 75: Barcode
- 76: Absender
- 77: Zone
- 78: Zonennummer
- 79: Datum
- 80: Gewicht
- 8: Kennschein ohne Routungsangabe
- 81: Absender
- 82: Empfänger
- 83: Sendungsart
- 84: Kundennummer
- 85: Kundennummer

## Patentansprüche

1. Verfahren zur Abrechnung von Versanddienstleistungen für ein Versandgut auf der Grundlage der Transportleistungstarife des dientleistenden Carriers in folgenden Schritten:
- ein in eine Einrichtung (3), wobei die Einrichtung eine Druckeinrichtung und eine Telekommunikationseinrichtung umfaßt, geladenes Anwenderprogramm (33) wird aktiviert, aus dem die Tarifleistungstabelle mindestens eines Carriers (61-64) auswählbar ist,
- das zu versendende Versandgut (5) wird gewogen,
- der ermittelte Gewichtswert wird in die Einrichtung (3) eingegeben,
- die weiteren Versandgutdaten, mindestens aber Zielort und Carrier (6) werden eingegeben,
- die Berechnung eines Leistungswertes für die Transportleistung des Versandgutes (5) wird in der Einrichtung (3) auf der Basis des gültigen Transportleistungstarifes des Carriers (6) ausgelöst,
- ein Kennschein, der die Versandparameter umfaßt, mindestens aber die wertkennzeichnende Versandgebühr des Versandgutes wiedergibt, wird mittels der Einrichtung (3) ausgedruckt,
- die Informationen des Kennscheine werden in der Einrichtung (3) zwischengespeichert
- die Einrichtung (3) wird über eine Telekomunikationseinrichtung (36) mit einer entfernten Datenzentrale ( 4) verbunden,
- die ausgeführte Wertkennzeichnung des Versandgutes (5) wird zur Datenzentrale (4) übertragen,
- die von der Einrichtung (3) gedruckten wertkennzeichnenden Versandgebühren werden in der Datenzentrale (4) erfaßt, zusammengetragen und mittels Abrechnungsprogramm getrennt für jeden Carrier (61-64) abgerechnet,
- von der Datenzentrale (4) wird mindestens dem Versender (1) das Abrechnungsergebnis als Basis für die Begleichung der Versanddienstleistung übermittelt.

2. Verfahren zur Abrechnung von Versanddienstleistungen für ein Versandgut auf der Grundlage der Transportleistungstarife des dientleistenden Carriers in folgenden Schritten:
- ein in eine Einrichtung (3), wobei die Einrichtung eine Druckeinrichtung und eine Telekommunikationseinrichtung umfaßt, geladenes Anwenderprogramm (33) wird aktiviert, aus dem die Tarifleistungstabelle mindestens eines Carriers (61-64) auswählbar ist,
- das zu versendende Versandgut (5) wird bezogen auf mindestens eine physikalische Größe des Versandgutes (5) bewertet ,
- die bestimmten Versandgutparameter werden in die Einrichtung (3) eingegeben,
- die weiteren Versandgutdaten, mindestens aber Zielort und Carrier (6) werden eingegeben,
- die Berechnung eines Leistungswertes für die Transportleistung des Versandgutes (5) wird in der Einrichtung (3) auf der Basis des gültigen Transportleistungstarifes des Carriers (6) ausgelöst,
- ein Kennschein, der die Versandparameter umfaßt, mindestens aber die wertkennzeichnende Versandgebühr des Versandgutes wiedergibt, wird mittels der Einrichtung (3) ausgedruckt,
- die Informationen des Kennscheine werden in der Einrichtung (3) zwischengespeichert
- die Einrichtung (3) wird über eine Telekomunikationseinrichtung (36) mit einer entfernten Datenzentrale (4) verbunden,
- die ausgeführte Wertkennzeichnung des Versandgutes (5) wird zur Datenzentrale (4) übertragen,
- die von der Einrichtung (3) gedruckten wertkennzeichnenden Versandgebühren werden in der Datenzentrale (4) erfaßt, zusammengetragen und mittels Abrechnungsprogramm getrennt für jeden Carrier (61-64) abgerechnet,
- von der Datenzentrale (4) wird mindestens dem Versender (1) das Abrechnungsergebnis als Basis für die Begleichung der Versanddienstleistung übermittelt.

3. Verfahren nach Anspruch 1 bis 2, **dadurch gekennzeichnet**, daß dem Anwendungsprogramm (33) Speichermittel (34) zugeordnet sind, umfaßt, in denen beispielsweise die Tariftabellen von mindestens einem Carrier (6), Empfängerdaten, Adreßdaten, Kennscheinformulare, Klischees des Versenders (1 ) gespeichert sind.

4. Verfahren nach Anspruch 3, **dadurch gekennzeichnet**, daß die gespeicherten Bilddaten für die Kennscheinformulare mindestens den Rahmen für einen Kennschein betreffen.

5. Verfahren nach Anspruch 4, **dadurch gekennzeichnet**, daß aus dem Speichermittel (34) Empfängerdaten ausgelesen werden und beispielsweise die Zustellzone und/oder die Routungsangabe in maschinenlesbarer Form, vorzugsweise als Barcode von der Druckeinrichtung (35) auf den Kennschein gedruckt werden.

6. Verfahren nach Anspruch 1 bis 5, **dadurch gekennzeichnet**, daß nach Ausführung jeder einzelnen Druckoperation automatisch die Daten von der Einrichtung (3) zur Datenzentrale (4) übertragen werden.

7. Verfahren nach Anspruch 1 bis 6, **dadurch gekennzeichnet**, daß die zwischengespeicherten Daten einer Anzahl von ausgeführten Druckoperationen zu einer ausgewählten Zeit und gebündelt zur Datenzentrale (4) übertragen werden.

8. Verfahren nach Anspruch 7, **dadurch gekennzeichnet**, daß die zwischengespeicherten Daten von der Einrichtung (3) an die Datenzentrale (4) übermittelt werden, nachdem eine vorgegebene Zeitspanne abgelaufen ist oder ein vordatierter Zeitpunkt erreicht ist.

9. Verfahren nach Anspruch 7, **dadurch gekennzeichnet**, daß die zwischengespeicherten Daten nach Erreichen einer vorgegebenen Stückzahl, zur Datenzentrale (4) übertragen werden.

10. Verfahren nach Anspruch 7, **dadurch gekennzeichnet**, daß die zwischengespeicherten Daten nach Erreichen einer summierten Wertgröße von der Einrichtung (3) zur Datenzentrale (4) übertragen werden.

11. Verfahren nach Anspruch 1 bis 2, **dadurch gekennzeichnet**, daß die Datenzentrale (4) von der erstellten Rechnung ein Duplikat zur Kontrolle der Leistungsabrechnung an den Carrier übermittelt.

12. Verfahren nach Anspruch 1 bis 2, **dadurch gekennzeichnet**, daß die Datenzentrale (4) das Abrechnungsergebnis an ein vom Versender (1) benanntes Geldinstitut übermittelt.

13. Verfahren nach Anspruch 1, **dadurch gekennzeichnet**, daß der von der Waage ermittelte Gewichtswert, manuell vom Versender (1) mittels einer Eingabeeinrichtung (31) in die Einrichtung (3) eingegeben wird.

14. Verfahren nach Anspruch 1, **dadurch gekennzeichnet**, daß der Versender (1) den Gewichtswert und weitere Versandgutparameter, beispielsweise die Abmessungen oder den Volumenwert, mittels der Eingabeeinrichtung (31) in die Einrichtung (3) eingibt.

15. Verfahren nach den Ansprüchen 1 bis 7, **dadurch gekennzeichnet**, daß jede ausgeführten Druckoperationen der Einrichtung (3) zu statistischen Zwecken zwischengespeichert wird.

16. Verfahren nach den Ansprüchen 1 bis 2, **dadurch gekennzeichnet**, daß aus Traifleistungstabellen von mindestens zwei Carrier (6) das Anwenderprogramm (33) aus den eingegebenen Versandparametern den günstigsten Carrier (6) ermittelt.

17. Verfahren nach den Ansprüchen 1 bis 2, **dadurch gekennzeichnet**, daß die Benutzung der Einrichtung (3) durch eine Paßworteingabe erfolgt.

18. Verfahren nach den Ansprüchen 1 bis 2, **dadurch gekennzeichnet**, daß das Abrechnungsergebnis unmittelbar nach jeder Abrechnungsprozedur durch die Datenzentrale (4) übermittelt wird.

19. Verfahren nach den Ansprüchen 1 bis 2, **dadurch gekennzeichnet**, daß die Abrechnungsergebnisse kummuliert übermittelt werden.
